# EUROPÄISCHE PATENTANMELDUNG

(11) **EP 2 138 653 A2**
(43) Veröffentlichungstag der Anmeldung: **30.12.2009**
(21) Anmeldenummer: 09161192.1
(22) Anmeldetag: 27.05.2009
(51) Int. Cl.: E04H 6/42

(54) **Parkraummanagement**

(30) Priorität: 23.06.2008 DE 102008029413
(71) Anmelder: PMS GmbH, 64546 Mörfelden-Walldorf (DE)
(72) Erfinder: Brück, Uwe, 55595, Bockenau (DE); Nieraad, Volker, 55444, Seibersbach (DE)
(74) Vertreter: WSL Patentanwälte

(57) **Zusammenfassung**

Die vorliegende Erfindung betrifft ein Verfahren zur Überwachung und Verwaltung von Parkraum, bei welchem die Belegung von Parkbuchten a, b, c, d erfasst und ausgewertet wird:

Diese Aufgabe wird dadurch gelöst, dass die Parkbuchten (a, b, c, d) mit einer Videooptik erfasst und die Videobilddaten ortsaufgelöst einer Bildanalyse unterzogen werden, wobei die Daten der Bildanalyse von Flächenbereichen (a1, a2, a3, b1, b2, b3 ..., d3), die je einer Parkbucht (a, b, c, d) zugeordnet sind, mit gespeicherten Videobilddaten verglichen werden, die einer Bildanalyse derselben Flächenbereiche (a1, ... d3) der unbelegten Parkbucht (a, b, c, d) entsprechen, wobei das Vergleichsergebnis als Kriterium für die aktuelle Parkbuchtbelegung verwendet wird.

## Beschreibung

Die vorliegende Erfindung betrifft ein System für das Parkraummanagement und genauer gesagt ein Verfahren und eine Vorrichtung zur Überwachung und Verwaltung von Parkraum, bei welchem die Belegung von Parkbuchten erfasst und ausgewertet wird. Entsprechende Parkraummanagementsysteme sind bereits seit langem bekannt. Die meisten Systeme arbeiten bisher in der Weise, dass sie die Ein- und Ausfahrt von Fahrzeugen zu bzw. von einem Parkplatz bzw. einem Parkhaus erfassen und daraus die Anzahl der insgesamt auf dem Parkplatz bzw. in dem Parkhaus befindlichen Fahrzeuge ermittelt und mit der nominellen Anzahl von Parkbuchten vergleichen.

Zur besseren Unterscheidung und aus Gründen der Einfachheit werden im Folgenden die Begriffe "Parkplatz" und "Parkhaus" synonym verwendet, und zwar im Sinne einer oder mehrerer zusammengehöriger Parkflächen, während der üblicherweise von einem Fahrzeug beanspruchte Parkraum als "Parkbucht" bezeichnet wird.

Darüber hinaus sind auch Parkraummanagementsysteme bekannt, welche individuelle Parkbuchten jeweils durch einen Infrarotsensor überwacht werden, wobei der Sensor entweder im Boden oder (im Falle eines Parkhauses) an der Decke oberhalb jeder Parkbucht vorgesehen ist.

Diese bekannten Parkraummanagementsysteme sind teilweise unzuverlässig und teilweise sehr aufwendig und teuer. Sofern nur das Ein- und Ausfahren eines z. B. durch eine Schranke gesicherten Parkplatzes erfasst und ausgewertet wird, kann es gelegentlich vorkommen, dass ein Fahrzeug durch absichtliches oder auch unabsichtliches bzw. aufgrund der konkreten Umstände bedingtes Vor- und Zurückfahren mehrfach über eine Induktionsschleife oder andere Einrichtungen hinwegfährt, die das Ein- oder Ausfahren des Fahrzeugs auf den bzw. von dem Parkplatz erfassen sollen. Dies kann dazu führen, dass die Anzahl der tatsächlich auf dem Parkplatz befindlichen Fahrzeuge nicht mit der scheinbar registrierten Anzahl übereinstimmt, so dass in der Regel noch mehrere Parkbuchten frei sind, während das System irrigerweise davon ausgeht, dass sämtliche Parkbuchten belegt sein müssten. Theoretisch kann auch der umgekehrte Fall eintreten, dass nämlich tatsächlich alle Parkbuchten belegt sind, obwohl nach der Buchführung des betreffenden Systems Parkbuchten frei sein müssten.

Entsprechende Systeme können auch nicht erfassen, wenn beispielsweise besonders große Fahrzeuge effektiv zwei Parkbuchten oder auch mehr blockieren oder wenn kleinere Fahrzeuge so abgestellt sind, dass sie tatsächlich mehrere Parkbuchten blockieren, und sie können ebenso wenig erfassen, wenn in bestimmten Bereichen, insbesondere kleinere Fahrzeuge so platzsparend geparkt sind, dass sie gemeinsam weniger Parkbuchten beanspruchen, als ihrer Anzahl entspricht.

Beide Situationen sollten nach Möglichkeit vermieden werden, wobei vor allem das Nichterfassen von tatsächlich vorhandenen freien Parkbuchten für den Parkplatzbetreiber einen wirtschaftlichen Schaden verursacht und insgesamt zur vermeidbaren Verkehrsbelastung führt. Vermeidbarer Verkehr wird auch hervorgerufen durch Anzeigen vermeintlich freier Parkbuchten, wenn tatsächlich alle Parkbuchten belegt sind.

Auch die Systeme mit Infrarotsensoren können diese Nachteile nicht vollständig beseitigen, da solche Infrarotsensoren insbesondere dann versagen, wenn Fahrzeuge nicht hinreichend exakt in den Umgrenzungen der Buchten stehen. Darüber hinaus sind solche Systeme außerordentlich aufwendig und teuer, da jede Parkbucht mit einem eigenen Sensor ausgestattet werden muss und diese Sensoren über entsprechende Stromversorgungs- und Signalleitungen mit zentralen Einrichtungen verbunden werden müssen.

Gegenüber diesem Stand der Technik liegt der vorliegenden Erfindung die Aufgabe zugrunde, ein Verfahren und eine Vorrichtung zur Überwachung und Verwaltung von Parkraum zu schaffen, welches in hohem Maße zuverlässig arbeitet und den Betreiber jederzeit exakte Informationen über die tatsächliche Belegung der einzelnen Parkbuchten liefert, die automatisch auswertbar sind.

Hinsichtlich des entsprechenden Verfahren wird diese Aufgabe dadurch gelöst, dass die Parkbuchten von einer Videooptik erfasst und die Videobilddaten ortsaufgelöst einer Bildanalyse unterzogen werden, wobei die Daten der Bildanalyse von Flächenbereichen, die je einer Parkbucht zugeordnet sind, mit gespeicherten Videodaten verglichen werden, die einer Bildanalyse derselben Flächenbereiche der unbelegten Parkbuchten entsprechen, wobei das Vergleichsergebnis als Kriterium für die aktuelle Parkbuchtbelegung verwendet wird.

Der Vorgang des erfindungsgemäßen Systems besteht unter anderem darin, dass es nicht erforderlich ist, dass irgendwelche Personen die Videobilder überwachen oder betrachten und entsprechende Daten eingeben oder Informationen weiterleiten, sondern dass die Bereitstellung der relevanten Informationen mit Hilfe einer entsprechenden Bildanalyse automatisch erfolgt. Dabei ist es insbesondere möglich, dass mit einer Videooptik gleichzeitig eine größere Zahl von Parkbuchten erfasst wird, so dass es nicht erforderlich ist, jeder einzelnen Parkbucht allein und individuell jeweils eine entsprechende Videooptik zuzuordnen.

Gemäß einer Ausführungsform ist dabei vorgesehen, dass von jeder Parkbucht mehrere individuell zu analysierende Flächenbereiche ausgewählt bzw. zugeordnet werden, wobei diese Flächen bei einer Parkbucht sowohl einen zentralen Bereich als auch Randbereiche der Parkbucht in der Weise abdecken, dass aus der Sicht der Videooptik die Projektionsfläche (Projektion auf eine zur optischen Achse senkrechten Ebene) eines gegebenenfalls darauf abgestellten Kleinfahrzeuges mit den für die Analyse ausgewählten Flächenbereichen überlappt. Als ein entscheidendes Kriterium könnte man dabei beispielsweise die Größe eines Motorrades oder Motorrollers zugrunde legen, was bedeutet, dass die einzelnen Flächenbereiche der jeweiligen Parkbucht so zugeordnet bzw. auf dem Bild der Parkbucht so angeordnet werden, dass die innerhalb der Parkbucht verbleibenden freien (nicht in die Analyse einbezogenen) Flächenbereiche jeweils so klein ist, dass es nicht möglich ist, einen Motorroller oder dergleichen auf der Parkfläche abzustellen, ohne dass dieser Motorroller mit mindestens einem der für die Analyse der Videobilddaten ausgewählten Flächenbereiche überlappt.

Dabei müssen diese Flächenbereiche keineswegs die Fläche der gesamten Parkbucht abdecken, sondern es reicht aus, wenn sie beispielsweise mindestens 30 % der abgebildeten Parkbuchtfläche abdecken, solange sie nur entsprechend über die abgebildete Parkbuchtfläche verteilt sind, so daß dazwischen keine größeren für das Abstellen eines Fahrzeuges ausreichenden Flächen verbleiben, die nicht in die Analyse eingehen.

Zweckmäßigerweise sind die betreffenden Flächenbereiche mehrere parallele Streifen, die in etwa in Längsrichtung der jeweiligen Parkbucht verlaufen, wobei von entsprechenden Parallaxenverzerrungen abzusehen ist. Die Reduzierung der Analyse auf bestimmte ausgewählte Flächenbereiche hilft dabei, die zu analysierenden Daten zu reduzieren und damit redundante Information sowie Fehler durch Erfassung nicht wesentlicher Randbereiche zu vermeiden.

Gemäß einer Ausführungsform der Erfindung werden die Videobilddaten mit einer Digitalkamera erzeugt. Dies ermöglicht in besonders einfacher Weise die gezielte Auswahl und Analyse einzelner Flächenbereiche der Gesamtfläche, die von der Digitalkamera erfasst wird, durch Auswahl entsprechender Pixeladressen. Es könnte aber ebenso gut auch ein Zeilensensor verwendet werden, wobei die Fläche der Parkbuchten durch einen schwenk- oder drehbaren Spielen abgescannt werden könnte.

Gemäß einer Ausführungsform der Erfindung ist die Bildanalyse eine Spektralanalyse, insbesondere eine Farbfilterung in mindestens einem Spektralband.

Gemäß einer weiteren Ausgestaltung der Erfindung umfasst die Spektralanalyse eine Farbfilterung in drei verschiedenen spektralen Bereichen bzw. Spektralbändern.

Zur Auswertung können beispielsweise die spektral gefilterten Videobilddaten der oben erwähnten Flächenbereiche mit gespeicherten, ebenfalls spektral gefilterten Videobilddaten derselben Flächenbereiche der unbelegten Parkbucht verglichen werden. Die unterschiedlichen spektralen Signale zwischen einer belegten und einer unbelegten Parkbucht ergeben dann eine zuverlässige Aussage über die Parkbuchtbelegung.

Die entsprechende Vorrichtung zur Überwachung und Verwaltung von Parkraum ist **dadurch gekennzeichnet, dass** sie eine Videooptik zur Erfassung der Fläche mindestens einer Parkbucht und eine Bildanalyse einer Auswahleinrichtung aufweist, die Bereiche der als Videobild erfassten Parkbuchtfläche für die Bildanalyse auswählt, wobei weiterhin eine Vergleichseinrichtung vorgesehen ist, welche die Bildanalysedaten mit gespeicherten, analysierten Videobilddaten derselben Flächenbereiche der nichtbelegten Parkbucht vergleicht.

Um die Zuordnung der Flächenbereiche zu einer Parkbucht zu erleichtern, können gemäß einer Ausführungsform der Erfindung Grenzmarkierungen der jeweiligen Parkbuchten in einer Farbgebung vorgesehen sein, die von der Vorrichtung leicht erfasst und spektral den Parkbuchten eindeutig zugeordnet werden kann. Wenn diese Grenzmarkierungen von der Videooptik und der Bildanalysevorrichtung eindeutig als Umgrenzungen der Parkbuchtfläche erkannt werden können, so kann das System automatisch die Flächenbereiche erzeugen und auswählen, die für die Spektralanalyse bzw. Farbfilterung vorgesehen sind.

Die Vorrichtung weist demzufolge in der bevorzugten Ausführungsform einen Spektralanalysator auf.

Weiterhin kann gemäß einer Ausführungsform der Erfindung ein Prozessor mit einer Vergleichslogik vorgesehen sein, welche die Videobilddaten der ausgewählten Flächenbereiche mit den entsprechenden gespeicherten Daten automatisch vergleicht. Wie bereits erwähnt, ist die dabei verwendete Videooptik vorzugsweise eine digitale Videokamera die das Videobild dementsprechend in Form digitaler Videobilddaten erfasst, wobei bestimmte Flächenbereiche eindeutig durch Pixeladressen, bzw. im Falle einer Zeilenkamera durch Angabe der gescannte Zeilen und der Adressen innerhalb der Zeile identifiziert werden können.

Zweckmäßigerweise ist jede Videokamera so angeordnet, dass sie mehrere Parkbuchten gleichzeitig erfasst, wobei darüber hinaus insgesamt eine Anzahl von digitalen Kameras vorgesehen ist, deren Gesichtsfeld insgesamt sämtliche zu überwachende Parkbuchten eines zu überwachenden Parkplatzes abdeckt.

Gemäß einer weiteren Ausgestaltung der Erfindung ist eine Auswertungszentrale vorgesehen, die die Analyseergebnisse mehrerer Parkplätze auswertet und die mit einem Verkehrsleitsystem verbunden ist, um beispielsweise auf entsprechenden Anzeigetafeln eines Verkehrsleitsystems die Anzahl freier Parkbuchten in einem gegebenen Parkhaus bzw. auf einem gegebenen Parkplatz anzuzeigen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 schematisch einen Parkplatz mit einer Anzahl von Parkbuchten, die von einer Videokamera überwacht werden,
Figur 2 das von der Kamera erfasste Videobild der überwachten Parkbuchten und
Figur 3 ein Schema der Bildanalyse und Auswertevorrichtung.

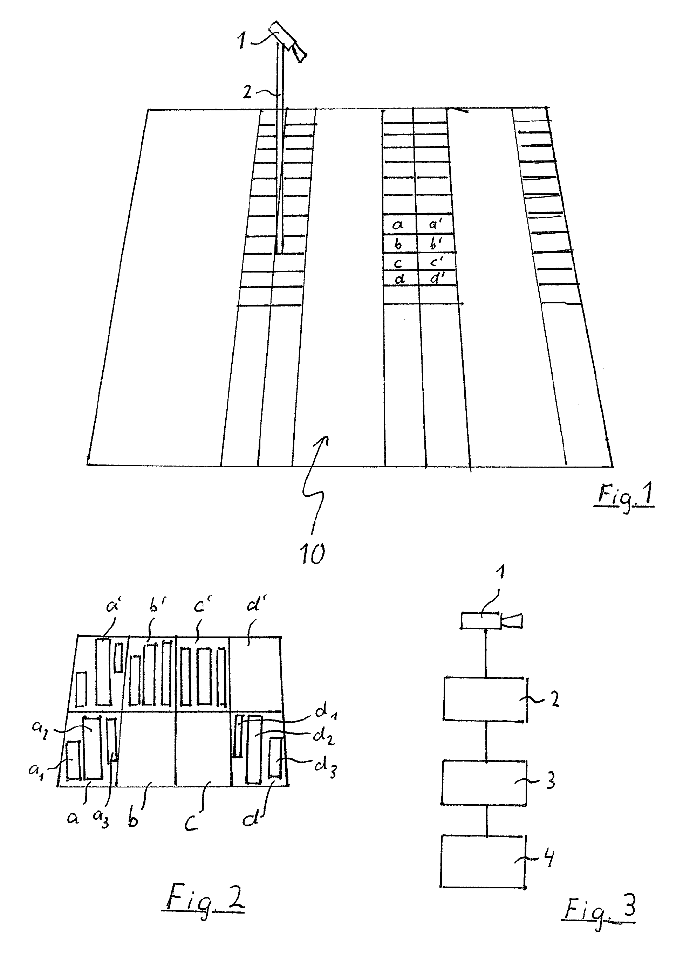

Man erkennt in Figur 1 einen insgesamt mit 10 bezeichneten Parkplatz, der eine Reihe von Parkbuchten aufweist, wobei insgesamt 8 Parkbuchten, die im Gesichtsfeld einer Videokamera 1 liegen, mit a, b, c, d bzw. a', b', c' und d' bezeichnet sind. Die Videokamera 2 ist zur Vermeidung von Überdeckungen der Parkflächen durch Fahrzeuge in benachbarten Parkbuchten auf einem Masten 2 montiert. Analog könnte die Videokamera 1 in einem Parkhaus an der Parkhausdecke montiert sein. In Figur 2 ist das von der Kamera 1 erfasste Video in einer natürlichen Fluchtpunktperspektive dargestellt. Es könnte bei Bedarf in eine ebene, isometrische Draufsicht umgerechnet werden.

Zusätzlich zu den Umgrenzungslinien 6, 7 der einzelnen Parkbuchten a, b, c, d sind in Figur 2 noch Flächenbereiche a1, a2, a3, b1, b2, b3 usw. dargestellt, die gemäß dem in Figur 3 wiedergegebenen Schema von einer Bildauswahleinrichtung erzeugt bzw. definiert werden. Die Auswahl dieser Flächenbereiche a1 ...d3 ermöglicht es, die erfassten digitalen Videobilddaten des jeweiligen Flächenbereiches a1 ...d3 einzeln zu analysieren und auszuwerten. Dabei sind die einzelnen Flächenbereiche im Wesentlichen vertikale Streifen der insgesamt erfassten Videobildfläche, die der bei einem bestimmten perspektivischen Winkel erfassten Fläche der Parkbuchten a, b... überlagert sind. Die ausgewählten Bildbereiche a1, a2 ... d3 werden dabei durch einfache Bildkoordinaten, d. h. horizontale und vertikale Bildkoordinaten festgelegt und sie werden so angeordnet, dass sie die jeweils erfasste Parkbuchtfläche nicht überschreiten, gleichzeitig aber einen ausreichend großen Teil der Parkbuchtfläche abdecken.

Die Aufteilung der Parkbuchtflächen in mehrere getrennte Flächenbereiche hat dabei den Vorteil einer größeren Zuverlässigkeit und an Genauigkeit, insbesondere dann, wenn Fahrzeuge beispielsweise so geparkt sind, dass sie die Parkbuchtmarkierungen überschreiten. Außerdem ermöglicht die Aufteilung in mehrere Flächenbereiche auch die Erkennung von Kleinfahrzeugen, wie z. B. Motorrädern oder Motorrollern, die womöglich nur mit einem der Flächenbereiche überlappen. Schießlich kann so die Menge der zu analysierende Videobilddaten reduziert werden.

Der Bildauswahleinrichtung 3 ist gemäß Figur 3 ein Spektralanalysator 4 nachgeordnet, der die Videobilddaten aus jeder der Flächenbereiche a1, a2 ... d3 erfassten Videobilddaten einer Spektralanalyse, genauer gesagt einer spektralen Filterung in vorzugsweise mindestens drei verschiedenen Spektralbereichen, unterzieht. Zuvor sind die von den entsprechenden Flächenbereichen a1, a2 ... d3 ebenfalls mit dem Spektralanalysator 4 analysierten Flächen der Parkbuchten a, b, c, d im unbelegten Zustand erfasst und abgespeichert worden. Hierbei unterscheiden sich die spektral gefilterten Bilddaten der Parkbuchten in den Bereichen a1, a2 ...d3 in ganz charakteristischer und eindeutiger Weise voneinander, wenn Daten einer mit einem Fahrzeug belegten Parkbucht mit den Daten der unbelegten Parkbucht verglichen werden. Auf diese Weise kann eindeutig festgestellt werden, ob eine Parkbucht belegt ist und ob das betroffene Fahrzeug so abgestellt ist, dass es im Wesentlichen zentral in der Parkbucht steht oder aber die Grenzlinie zu einer benachbarten Parkbucht überschreitet oder ob es sich beispielsweise um ein Kleinfahrzeug handelt, welche nur in einem der Flächenbereiche einer Parkbucht eine entsprechende Signatur in dem spektral analysierten Bild hinterlässt.

Dem Spektralanalysator 4 ist eine entsprechende Vergleichseinrichtung nachgeschaltet, die aus einem Prozessor mit einer Vergleichslogik besteht, wobei der Prozessor auf die entsprechenden gespeicherten Videobilddaten der unbelegten Parkbuchten zurückgreift und diese mit den konkret erfassten und spektral gefilterten aktuellen Videobilddaten vergleicht, um dann ein Signal auszugeben, welches den Belegungszustand aller von der Kamera erfassten Parkbuchten angibt.

Dieses Signal kann dann weiter verarbeitet werden und beispielsweise eine entsprechende Anzeige auf einer Anzeigetafel der Parkplatzeinfahrt auslösen, die angibt, wie viele freie Parkbuchten auf dem Parkplatz bzw. in dem Parkhaus noch vorhanden sind. Die entsprechenden Signale können darüber hinaus auch an ein Verkehrsleitsystem weitergegeben werden, welches Anzeigeeinrichtungen auch an von dem Parkplatz bzw. Parkhaus entfernten Orten steuert.

Auf diese Weise wird es möglich, den vorhandenen Parkraum besser zu nutzen und Parkhäuser und Parkplätze besser auszulasten, indem Fehlmeldungen über den Belegungszustand des Parkplatzes vermieden werden. Ein weiterer Vorteil des erfindungsgemäßen Systems besteht darin, dass durch konkrete Bilddaten die Parkbuchtenbelegung auch lückenlos dokumentiert werden kann. Beispielsweise könnte die Kamera alle 10 Sekunden ein Standbild der überwachten Parkbucht erzeugen und anhand der gespeicherten Bilder eine Langzeitbelegung einer Parkbucht lückenlos dokumentieren. Dies verhindert betrügerische Manipulationsversuche, wenn Langzeitparker behaupten, sie hätten ihre entsprechende Parkkarte verloren, hätten aber die betreffende Parkbucht tatsächlich nur kurzzeitig besetzt. Es versteht sich, dass dabei redundante Bildaufzeichnung gelöscht werden könnte, so dass jeweils nur das Bild vor und nach einer aufgetretenen Änderung des Belegungszustands irgendeiner der überwachten Parkbuchten gespeichert wird, und zwar solange, bis sich die Belegung sämtlicher überwachter Parkbuchten der betreffenden Kamera geändert hat.

Je nach den vorliegenden räumlichen Verhältnissen kann eine Kamera in der Praxis mindestens 4 und eventuell auch bis zu 16 oder 20 Parkbuchten gleichzeitig erfassen und in der beschriebenen Weise überwachen.

Die Stromversorgung und Signalverkabelung ist dementsprechend relativ einfach im Vergleich zu einem System, bei welchem jeder einzelnen Parkbucht ein individueller Sensor zugeordnet ist.

Es versteht sich, dass die Kameras mit der zentralen Auswertungs- und Erfassungseinrichtung auch über ein Funknetz kommunizieren können.

Die einzelnen Parkbuchten könnten auch durch ein Scanverfahren erfasst werden, in dem beispielsweise ein rotierender Spiegel die Fläche der Parkbuchten auf einen entsprechenden Sensor, z. B. einen Zeilensensor, reflektiert. Der Begriff "Kamera" umfasster hier jegliche Art von optischen Sensoren, welche ortsaufgelöst optische Information in sichtbaren Spektralbereichen aufnehmen kann.

## Patentansprüche

1. Verfahren zur Überwachung und Verwaltung von Parkraum, bei welchem die Belegung von Parkbuchten a, b, c, d erfasst und ausgewertet wird, **dadurch gekennzeichnet, dass** die Parkbuchten (a, b, c, d) mit einer Videooptik erfasst und die Videobilddaten ortsaufgelöst einer Bildanalyse unterzogen werden, wobei die Daten der Bildanalyse von Flächenbereichen (a1, a2, a3, b1, b2, b3 ..., d3), die je einer Parkbucht (a, b, c, d) zugeordnet sind, mit gespeicherten Videobilddaten verglichen werden, die einer Bildanalyse derselben Flächenbereiche (a1, ... d3) der unbelegten Parkbucht (a, b, c, d) entsprechen, wobei das Vergleichsergebnis als Kriterium für die aktuelle Parkbuchtbelegung verwendet wird.

2. Verfahren nach Anspruch 1, **dadurch gekennzeichnet, dass** jeder Parkbucht (a, b, c, d) mehrere individuell zu analysierende Flächenbereiche (a1, ... d3) ausschließlich zugeordnet sind, die sowohl einen zentralen Bereich als auch Randbereiche der Parkbucht (a, b, c, d) in der Weise abdecken, dass aus der Sicht der Videooptik die Projektionsfläche eines gegebenenfalls darauf abgestellten Kleinfahrzeuges unvermeidlich mit mindestens einem der für die Analyse ausgewählten Flächenbereiche (a1, ... d3) überlappt.

3. Verfahren nach Anspruch 1 oder 2, **dadurch gekennzeichnet, dass** die einer Parkbucht (a, b, c, d) zugeordneten Flächenbereiche (a1,... d3) mindestens 30 % der jeweiligen Parkbuchtfläche abdecken.

4. Verfahren nach einem der Ansprüche 1 bis 3, **dadurch gekennzeichnet, dass** die Flächenbereiche (a1, ... d3) mehrere parallele Streifen sind, die in etwa in Längsrichtung der jeweiligen Parkbucht verlaufen.

5. Verfahren nach einem der Ansprüche 1 bis 4, **dadurch gekennzeichnet, dass** die Videobilddaten mit einer Digitalkamera erzeugt werden.

6. Verfahren nach einem der Ansprüche 1 bis 5, **dadurch gekennzeichnet, dass** die Bildanalyse eine Spektralanalyse ist.

7. Verfahren nach Anspruch 6, **dadurch gekennzeichnet, dass** die Spektralanalyse eine Farbfilterung in mindestens einem Spektralband, vorzugsweise in mindestens 3 verschiedenen Spektralbändern umfasst.

8. Verfahren nach einem der Ansprüche 6 oder 7, **dadurch gekennzeichnet, dass** die spektralgefilterten Videobilddaten der Flächenbereiche (a1, ... d3) mit gespeicherten, spektralgefilterten Videobilddaten derselben Flächenbereiche (a1, ... d3) der unbelegten Parkbucht (a, b, c, d) verglichen werden.

9. Vorrichtung zur Überwachung und Verwaltung von Parkraum, durch welche die belegten Parkplätze erfasst und ausgewertet werden, **dadurch gekennzeichnet, dass** die Vorrichtung eine Videooptik zur Erfassung der Fläche mindestens eine Parkbucht, eine Bildanalyseeinrichtung und eine Auswahleinrichtung aufweist, welche Bereiche der als videobilderfassten Parkbuchtfläche für die Bildanalyse auswählt, und weiterhin eine Vergleichseinrichtung aufweist, welche die Bildanalysedaten mit gespeicherten Videobilddaten derselben Flächenbereiche (a1, ... d3) der nicht belegten Parkbucht (a, b, c, d) vergleicht.

10. Vorrichtung nach Anspruch 9, **dadurch gekennzeichnet, dass** Grenzmarkierungen der jeweiligen Parkbucht in einer Farbgebung vorgesehen sind, die von der Vorrichtung erfasst und spektralen Parkbuchten eindeutig zugeordnet werden kann.

11. Verfahren nach Anspruch 9 oder 10, **dadurch gekennzeichnet, dass** die Bildanalyse einen Spektralanalysator aufweist.

12. Vorrichtung nach einem der Ansprüche 9 bis 11, **dadurch gekennzeichnet, dass** sie einen Prozessor mit einer Vergleichslogik aufweist.

13. Vorrichtung nach einem der Ansprüche 9 bis 12, **dadurch gekennzeichnet, dass** sie eine digitale Videokamera aufweist.

14. Vorrichtung nach Anspruch 13, **dadurch gekennzeichnet, dass** die Vorrichtung eine Anzahl von digitalen Kameras aufweist, deren Gesichtsfeld insgesamt sämtliche zu überwachende Parkbuchten eines zu bewachenden Parkplatzes erfasst.

15. Vorrichtung nach einem der Ansprüche 9 bis 14, **dadurch gekennzeichnet, dass** eine Auswertungszentrale vorgesehen ist, die die Analyseergebnisse mehrerer Parkplätze auswertet und die mit einem Verkehrsleitsystem verbunden ist.
